(19) Europäisches Patentamt / European Patent Office / Office européen des brevets

(11) **EP 2 406 659 B1**

(12) **EUROPÄISCHE PATENTSCHRIFT**

(45) Veröffentlichungstag und Bekanntmachung des Hinweises auf die Patenterteilung:
**31.12.2014 Patentblatt 2015/01**

(51) Int Cl.:
*G01S 13/36* (2006.01)          *G01S 15/36* (2006.01)
*G01S 17/36* (2006.01)

(21) Anmeldenummer: **10718840.1**

(86) Internationale Anmeldenummer:
**PCT/DE2010/000271**

(22) Anmeldetag: **10.03.2010**

(87) Internationale Veröffentlichungsnummer:
**WO 2010/102613 (16.09.2010 Gazette 2010/37)**

(54) **ABSTANDSMESSUNG**

DISTANCE MEASUREMENT

MESURE DE DISTANCE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **11.03.2009 DE 102009012646**

(43) Veröffentlichungstag der Anmeldung:
**18.01.2012 Patentblatt 2012/03**

(73) Patentinhaber: **Carl Zeiss AG**
**73447 Oberkochen (DE)**

(72) Erfinder: **SCHRIEFER, Bernhard**
**12524 Berlin (DE)**

(74) Vertreter: **Fischer, Uwe**
**Patentanwalt**
**Moritzstraße 22**
**13597 Berlin (DE)**

(56) Entgegenhaltungen:
**GB-A- 2 336 493     US-A- 4 537 502**
**US-A- 5 742 379**

EP 2 406 659 B1

## Beschreibung

Die Erfindung bezieht sich auf ein Verfahren zum Messen des Abstandes zwischen einer Abstandsmesseinrichtung und einem Objekt.

Die Patentschrift US 4,537,502 offenbart ein Verfahren zum Messen des Abstandes eines Objekts, bei dem eine Oszillatorfrequenz mittels zweier Teiler auf zwei Messfrequenzen heruntergeteilt wird. Die Teilerfaktoren der beiden Teiler stehen in einem vorgegebenen Verhältnis zueinander. Die beiden Messfrequenzen werden zum Messen des Abstandes herangezogen.

Die Patentschrift US 5,742,379 offenbart ein Verfahren zum Messen des Abstandes eines Objekts, bei dem ein Sendesignal mit einer vorgegebenen Pulswiederholrate gebildet und zum Messen des Objektabstandes verwendet wird.

Die britische Offenlegungsschrift GB 2 336 493 beschreibt ein Verfahren, bei dem eine Oszillatorfrequenz mittels separater Teiler heruntergeteilt wird und die heruntergeteilten Frequenzen zum Messen des Objektabstandes herangezogen werden.

Der Erfindung liegt die Aufgabe zugrunde, ein Verfahren anzugeben, das sich einfach durchführen lässt und dennoch eine hohe Messgenauigkeit bietet.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass ein Sendesignal mit einer eine vorgegebene Pulswiederholfrequenz aufweisenden Pulsfolge erzeugt wird, so dass das Sendesignal im Frequenzbereich einen Frequenzkamm aufweist, das Sendesignal auf das Objekt gelenkt wird und ein von dem Objekt reflektiertes Reflexionssignal empfangen wird, die Phasendifferenz zwischen dem Sendesignal und dem Reflexionssignal für eine vorgegebene Spektrallinie des Frequenzkammes bestimmt und mit der Phasendifferenz der Abstand ermittelt wird. Um den Eindeutigkeitsbereich der Abstandsmessung zu erhöhen, ist erfindungsgemäß vorgesehen, dass die Phasendifferenz zwischen dem Sendesignal und dem Reflexionssignal für zwei Spektrallinien, also für eine erste und eine zweite Spektrallinie, des Frequenzkammes bestimmt wird und sowohl die Phasendifferenz zwischen dem Sendesignal und dem Reflexionssignal für die erste Spektrallinie als auch die Phasendifferenz zwischen dem Sendesignal und dem Reflexionssignal für die zweite Spektrallinie bei der Bestimmung des Abstandswertes herangezogen wird.

Der Abstand lässt sich besonders einfach und damit vorteilhaft bestimmen gemäß:

$$A = \frac{\varphi_{MESS}}{2 \cdot \pi} * c,$$

wobei c die Ausbreitungsgeschwindigkeit des Sendesignals zu dem Objekt und $\varphi_{MESS}$ die Phasendifferenz zwischen dem Sendesignal und dem Reflexionssignal für die Spektrallinie bezeichnet.

Vorzugsweise wird geprüft, ob die Phasendifferenz für die erste Spektrallinie größer oder kleiner als die Phasendifferenz für die zweite Spektrallinie ist, und es wird der Abstandswert in Abhängigkeit von dem Prüfergebnis bestimmt.

Weist die zweite Spektrallinie eine höhere Frequenz als die erste Spektrallinie auf, so lässt sich der Abstandswert A bestimmen gemäß

$$A = c * \frac{\varphi_{MESS,2} - \varphi_{MESS,1}}{2 \cdot \pi \cdot fw} \qquad \text{falls gilt } \varphi_{MESS,1} < \varphi_{MESS,2}$$

und

$$A = c * \frac{\varphi_{MESS,1} - \varphi_{MESS,2} + 2 \cdot \pi}{2 \cdot \pi \cdot fw} \qquad \text{falls gilt } \varphi_{MESS,1} > \varphi_{MESS,2}$$

wobei c die Ausbreitungsgeschwindigkeit des Sendesignals zu dem Objekt, $\varphi_{MESS,1}$ die Phasendifferenz zwischen dem Sendesignal und dem Reflexionssignal für die erste Spektrallinie, $\varphi_{MESS,2}$ die Phasendifferenz zwischen dem Sendesignal und dem Reflexionssignal für die zweite Spektrallinie und fw die Pulswiederholfrequenz bezeichnet.

Vorzugsweise werden zwei im Frequenzspektrum benachbarte Spektrallinien des Frequenzkammes als erste und zweite Spektrallinie ausgewertet.

Auch wird es als vorteilhaft angesehen, wenn die erste und die zweite Spektrallinie des Sendesignals und des Reflexionssignals jeweils auf dieselbe Zwischenfrequenz heruntergemischt werden und die Phasendifferenz zwischen dem Sendesignal und dem Reflexionssignal für die erste Spektrallinie und die Phasendifferenz zwischen dem Sendesignal und dem Reflexionssignal für die zweite Spektrallinie anhand der heruntergemischten Signale bestimmt werden.

Zum Heruntermischen wird bevorzugt eine Oszillatorfrequenz verwendet, die im Frequenzband asymmetrisch zwischen zwei benachbarten Spektrallinien des Frequenzkammes liegt. Durch eine solche Frequenzwahl wird erreicht, dass nur eine einzige Spektrallinie des Frequenzkammes auf die Zwischenfrequenz heruntergemischt wird, und nicht zwei verschiedene Spektrallinien.

Das Sendesignal und das Reflexionssignal werden vorzugsweise für die erste und die zweite Spektrallinie jeweils auf eine Zwischenfrequenz heruntergemischt, die zwischen 1 kHz und 20 MHz liegt und beispielsweise 10,7 MHz beträgt. Bei einer solchen Wahl der Zwischenfrequenz kann auf kostengünstige Mischerkomponenten aus der UKW-Radiotechnik zurückgegriffen werden.

Die Erfindung bezieht sich außerdem auf eine Anordnung zum Messen des Abstandes eines Objekts. Erfindungsgemäß ist die Anordnung ausgestattet mit einer Sendeeinrichtung zum Erzeugen eines Sendesignals, das im Zeitbereich eine Pulsfolge mit einer vorgegebenen Pulswiederholfrequenz und im Frequenzbereich einen Frequenzkamm aufweist, einer Empfangseinrichtung zum Empfangen eines von dem Objekt reflektierten Reflexionssignals und einer Auswerteinrichtung, die zum Bestimmen des Abstands die Phasendifferenz zwischen dem Sendesignal und dem Reflexionssignal für eine vorgegebene Spektrallinie des Frequenzkammes heranzieht.

Vorzugsweise bestimmt die Auswerteinrichtung die Phasendifferenz zwischen dem Sendesignal und dem Reflexionssignal für zwei unterschiedliche Spektrallinien des Frequenzkammes und zieht die beiden Phasendifferenzen zum Bestimmen des Abstandswertes heran.

Die Auswerteinrichtung ist bevorzugt derart ausgestaltet, dass sie prüft, ob die Phasendifferenz für die erste Spektrallinie größer oder kleiner als die Phasendifferenz für die zweite Spektrallinie ist; anschließend bestimmt sie den Abstand in Abhängigkeit von dem Prüfergebnis.

Im Übrigen wird es als vorteilhaft angesehen, wenn die Anordnung zumindest einen umschaltbaren Oszillator sowie zumindest zwei mit dem Oszillator verbundene Mischer aufweist, wobei die zwei Mischer wahlweise die erste oder die zweite Spektrallinie des Sendesignals und des Reflexionssignals auf dieselbe Zwischenfrequenz heruntermischen.

Die Oszillatorfrequenz des Oszillators liegt im Frequenzband vorzugsweise asymmetrisch zwischen zwei benachbarten Spektrallinien des Frequenzkammes des Sende- oder Reflexionssignals.

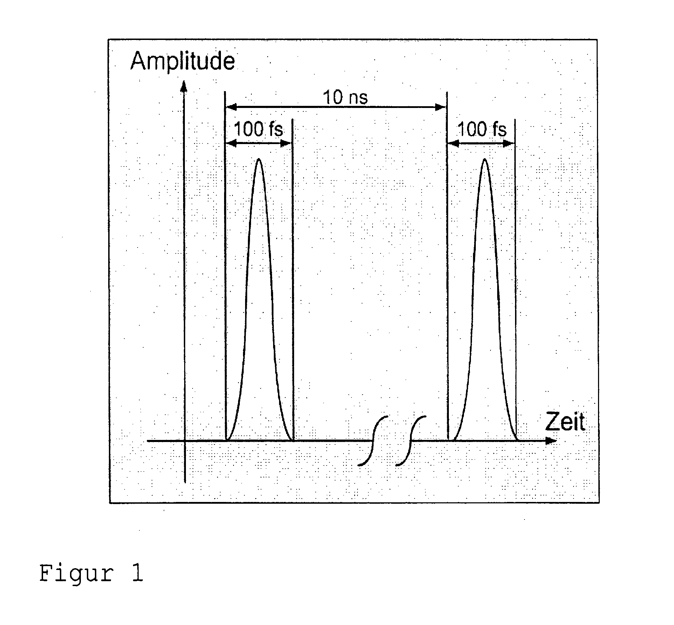

Im Zusammenhang mit den Figuren 1 bis 8 werden nachfolgend Ausführungsbeispiele der Erfindung beschrieben. Diese sind selbstverständlich nur beispielhaft zu verstehen.

Die Figuren 1 bis 8 zeigen ein Verfahren zur Entfernungsmessung mit periodischen Laserpulsen als Sendesignale und einem oder mehreren Photodetektoren als Empfänger. Im nachfolgend beschriebenen Ausführungsbeispiel wird ein Kurzpuls-Laser verwendet, der Pulse der zeitlichen Länge von beispielsweise T = 100 fs mit einer Wiederholrate von beispielsweise fw = 100 MHz aussendet. Die Wellenlänge des Lasers liegt vorzugsweise im Infrarotbereich.

Bei den hier beschriebenen Ausführungsbeispielen werden für die Abstandsmessung elektromagnetische Wellen in Form von Laserstrahlung eingesetzt; selbstverständlich können auch andere Arten von Messstrahlen, beispielsweise Mikrowellen, akustische Wellen oder dergleichen verwendet werden.

Die Figur 1 zeigt beispielhaft den zeitlichen Verlauf der Laserpulse. Die mittlere Leistung des Lasers beträgt beispielsweise 100 mW. Die Pulsform ist beispielsweise Sekanshyperbolisch zum Quadrat ($sech^2$).

Nach Empfang des Lasersignals von einer Photodiode entsteht ein elektrisches Signal am Ausgang der Photodiode. Dieses besteht analog zum Lasersignal aus kurzen Pulsen mit der Wiederholrate fw = 100 MHz.

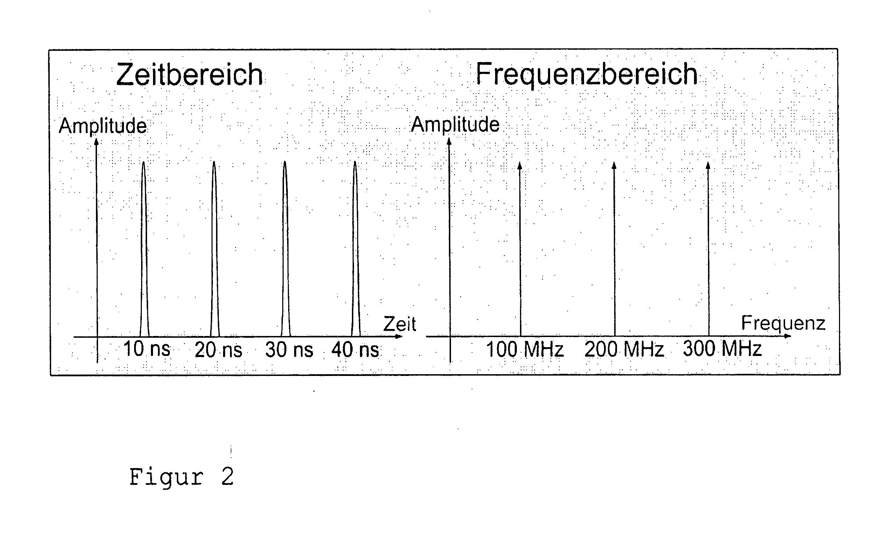

Die Figur 2 zeigt beispielhaft das elektrische Signal, welches die Photodiode liefert. Man erkennt den Pulskamm im Zeit- und Frequenzbereich am Ausgang der Photodiode. Im Frequenzbereich besteht das Signal aus äquidistanten Spektrallinien im Abstand von 100 MHz. Aufgrund der sehr kurzen Pulse erstreckt sich der Frequenzbereich des Pulskammes bis in die Größenordnung mehrerer Tausend Gigahertz (>1000 GHz).

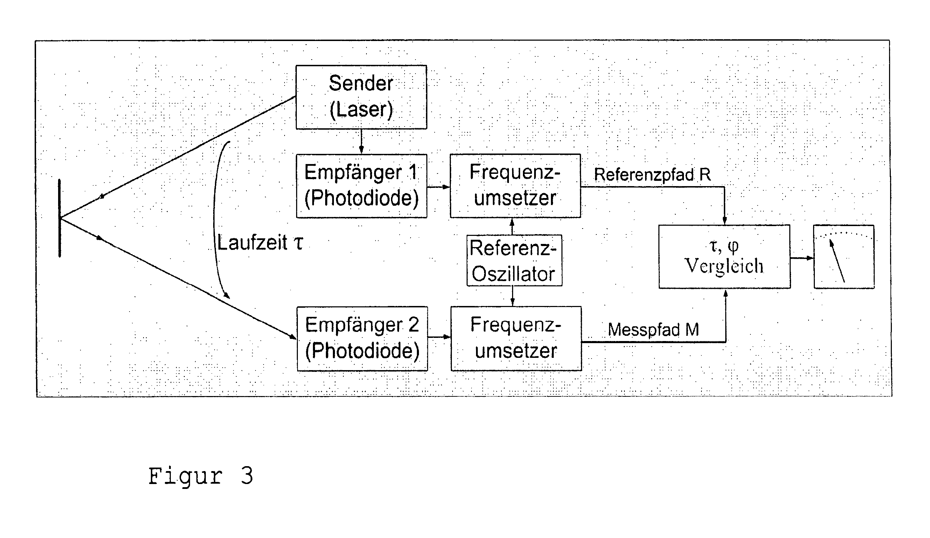

Die Figur 3 zeigt ein Ausführungsbeispiel für eine Anordnung für die Entfernungsmessung. Das vom Laser erzeugte Licht wird zweimal auf eine Photodiode geleitet. Zum einen unmittelbar nach der Aussendung (Referenzpfad R) und ein zweites Mal nach erfolgter Reflexion am Messobjekt (Messpfad M). Um die Auswertung der Signale zu vereinfachen, werden sie mit einem Frequenzumsetzer (Mischer) auf eine tiefere Zwischenfrequenz umgesetzt. Die Phaseninformation der Signale zueinander bleibt dabei erhalten. Am Eingang des Phasenvergleichers stehen demnach zwei herunter gemischte Signale zur Verfügung - das Referenzsignal R und das Messsignal M.

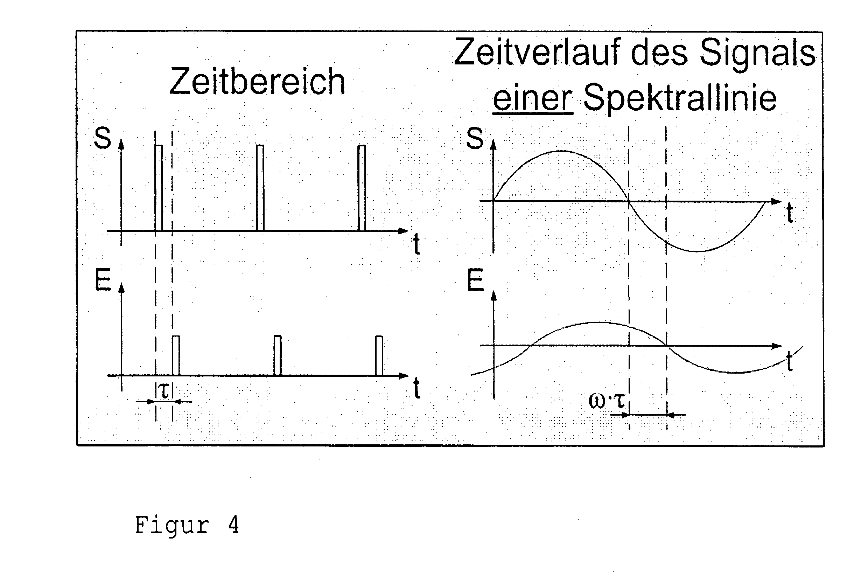

Die Figur 4 zeigt die von beiden Photoempfängern (Photodiode mit Verstärker) gelieferten Signale sowie den Zeit- und Phasenversatz von Referenz- und Mess-Signal. Im Zeitbereich liegen die Pulskämme um die Laufzeit τ voneinander verschoben. Betrachtet man den Zeitverlauf der Spannung nur einer einzelnen Spektrallinie (sinusförmiger Verlauf), erkennt man den Versatz der Phase um $\varphi = \omega \cdot t$. Wie bereits erwähnt, bleiben der zeitliche wie phasenmäßige Versatz von Referenz- und Messsignal auch nach der Frequenzumsetzung erhalten.

Die Bestimmung der gesuchten Laufzeit gestaltet sich deshalb einfach nach der Beziehung

$$\tau \ = \ \varphi/\omega, \hspace{4cm} (1)$$

mit $\omega = 2\pi f$ und f Frequenz der beiden Empfangssignale (R, M). Die Frequenz f ist bei Einsatz eines Femtosekunden-Lasers mit extrem hoher Genauigkeit bekannt.

Bei dem hier beschriebenen Ausführungsbeispielen wird eine Spektrallinie bei 24 GHz ausgewertet. Da die Phasenverschiebung proportional zur Frequenz ist, kann eine sehr hohe Messgenauigkeit erreicht werden.

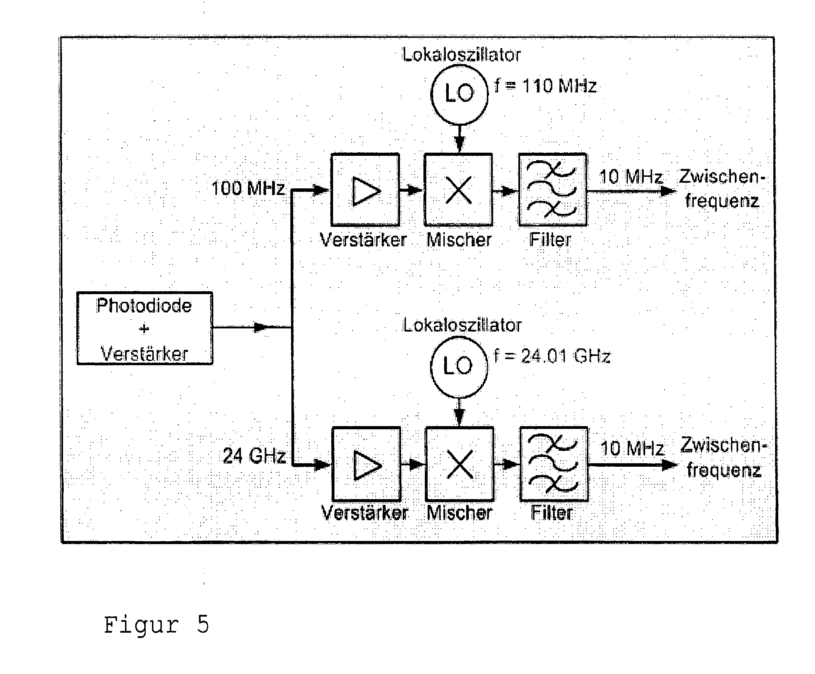

Der für die Frequenzumsetzung notwendige Lokaloszillator ist - wie jeder reale Oszillator - von Phasenrauschen betroffen. Werden zwei physikalisch voneinander unabhängige Lokaloszillatoren verwendet, so ist deren Phasenrauschen nicht miteinander korreliert. In diesem Fall würde das Phasenrauschen der beiden Lokaloszillatoren eine zusätzliche Messunsicherheit beim Vergleich der Phasen der beiden herunter gemischten Signale erzeugen. Dies lässt sich gemäß einer vorteilhaften Ausgestaltung des Verfahrens verhindern, indem ein einziger Lokaloszillator zur Ansteuerung beider Mischer verwendet wird. Es darf aber für die beiden 100 MHz Mischer (siehe nachfolgenden Text und Fig. 5) ein anderer Lokaloszillator verwendet werden als für beide 24 GHz Mischer.

Bei der Messung der Phase kann nur innerhalb des Bereiches von 0 bis 360° eine eindeutige Zuordnung der gemessenen Phase zur Laufzeit gemacht werden. Die Auswertefrequenz von 24 GHz entspricht einer Freiraum-Wellenlänge von 12.5 mm, so dass der Eindeutigkeitsbereich einer Laufstrecke von ebenfalls 12.5 mm entspricht. Da das Licht die einfache Entfernung zum Messobjekt zweimal zurücklegen muss, entspricht der Eindeutigkeitsbereich bezogen auf die Entfernung zum Messobjekt deshalb nur 6.25 mm.

Um den Eindeutigkeitsbereich zu vergrößern, können zwei unterschiedliche Frequenzen ausgewertet werden. Wählt man als zweite Auswertefrequenz neben 24 GHz die Grundfrequenz der Laserpulsfolge bei 100 MHz, so liegt der Eindeutigkeitsbereich bei 3- (Laufstrecke) bzw. 1,5 m (Entfernung). Die hohe Messgenauigkeit bleibt erhalten, da die Signale bei 100 MHz und 24 GHz gleichzeitig ausgewertet werden. So werden die Vorteile der hohen Auswertefrequenz (hohe Messgenauigkeit) mit den Vorteilen der kleinen Auswertefrequenz (großer Eindeutigkeitsbereich) miteinander kombiniert.

Die Figur 5 zeigt beispielhaft einen kombinierten 100 MHz/ 24 GHz Empfänger bis zur Zwischenfrequenz wie er zur Auswertung der 100 MHz und 24 GHz Signale für den Mess- und Referenzkanal realisiert werden kann (im Bild ist nur einer der beiden Kanäle gezeigt). Die Zwischenfrequenz ist im Beispiel von Fig. 5 zu 10 MHz gewählt.

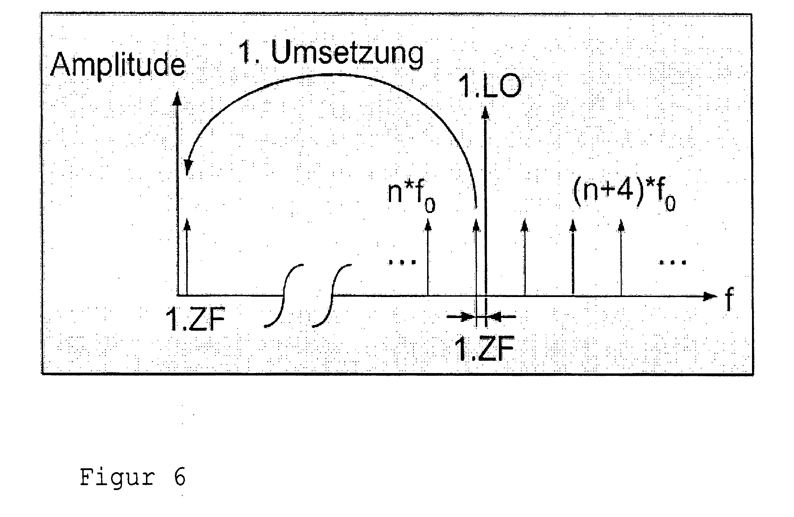

Für die grundsätzliche Funktionalität eines Überlagerungs-Empfängers ist die Wahl der Oszillatorfrequenz (Erster Lokaloszillator LO in Figur 6) weitgehend beliebig. In Verbindung mit Frequenzkämmen entsteht allerdings ein besonders vorteilhafter Empfänger dann, wenn die 1. Lokaloszillatorfrequenz derart gewählt wird, dass es nach Faltung der unterhalb und oberhalb der Lokaloszillator-Linie liegenden Anteile des Frequenzkammes an der Lokaloszillator-Linie zu keiner Überlappung von Spektrallinien des Frequenzkammes kommt. Anders formuliert bedeutet dies, dass die Lokaloszillatorfrequenz in diesem Fall vorzugsweise asymmetrisch zwischen zwei Linien des Frequenzkammes positioniert wird. Sämtliche Frequenzdifferenzen (die möglichen Zwischenfrequenzen entsprechen) zwischen Lokaloszillatorfrequenz und einer beliebig gewählten Spektrallinie des Frequenzkammes sind damit unterschiedlich. Dies bedeutet gleichzeitig, dass es mit einer einzigen Frequenzumsetzung und einem hinreichend schmalbandigen Zwischenfrequenzfilter - ZF-Filter - möglich ist, gezielt eine (einzige) Spektrallinie des Frequenzkammes auf die (weitgehend beliebig) wählbare Zwischenfrequenz (1. ZF in Figur 6) eindeutig umzusetzen.

Der Lokaloszillator wird entsprechend der vorstehenden Ausführungen beispielsweise auf eine Frequenz von 24.010,0 MHz gesetzt. Damit wird die Spektrallinie bei 24.000,0 MHz auf die Zwischenfrequenz von 10,0 MHz umgesetzt. Die auf andere Frequenzen umgesetzten Spektrallinien des Frequenzkammes werden vorzugsweise durch ein hinreichend schmalbandiges 10 MHz ZF-Filter unterdrückt. Damit steht am Empfängerausgang ein rein sinusförmiges ZF-Signal der Frequenz 10 MHz zur Verfügung, das eindeutig der 24,0 GHz Spektrallinie des Frequenzkammes zugeordnet werden kann.

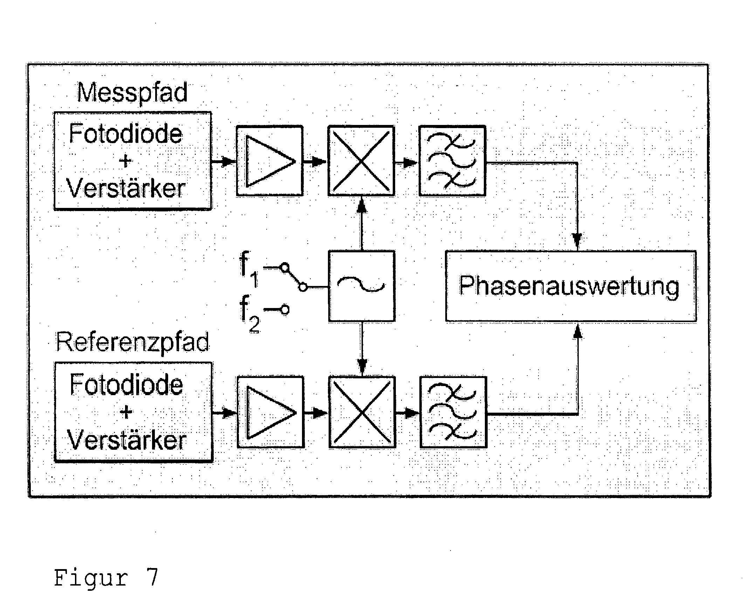

Um den Eindeutigkeitsbereich der Abstandsmessung noch weiter zu vergrößern, kann der Empfänger so ausgeführt werden, dass nicht nur die Spektrallinie bei 24 GHz, sondern z. B. auch die benachbarte bei 24.1 GHz ausgewertet werden kann. Dies wird durch zwei LO-Frequenzen $f_1$ und $f_2$ möglich (siehe Figur 7). Die Figur 7 zeigt beispielhaft einen Empfänger mit einem Frequenzumsetzer mit schaltbarem Lokaloszillator.

Wegen der Periodizität der trigonometrischen Funktionen ist die gemessene Phasendifferenz $\varphi_{MESS}$ immer auf den Bereich 0° bis 360° beschränkt. Die tatsächliche Phase bei der Kreisfrequenz $\omega_1$ beträgt jedoch

$$\omega_1 \cdot \tau = \varphi_{MESS,1} + n \cdot 2 \cdot \pi \; mit \; n \in \mathrm{N} \; , \qquad (2)$$

und bei der Kreisfrequenz $\omega_2$

$$\omega_2 \cdot \tau = \varphi_{MESS,2} + m \cdot 2 \cdot \pi \; mit \; m \in \mathrm{N} \; . \qquad (3)$$

Dabei sind die Größen m, n zunächst noch nicht bekannt. Die Laufzeit r ist die gesuchte Größe. Für $f_1$ = 24 GHz und $f_2$ = 24.1 GHz und $0 < \tau < 10 \; ns$ (entsprechend einer Laufstrecke bis 3 m) können sich die Terme $\omega_1 \cdot \tau$ und $\omega_2 \cdot \tau$ maximal um $2 \cdot \pi$ voneinander unterscheiden.

$$\omega_2 \cdot \tau - \omega_1 \cdot \tau = 2\pi \cdot \tau (f_2 - f_1) = 2 \cdot \pi \quad für \; \tau = 10 \; ns \qquad (4)$$

Damit gilt entweder n = m oder n + 1 = m. Werden Gleichungen (2) und (3) voneinander abgezogen, kommt man zu

$$\tau = \frac{\varphi_{MESS,2} - \varphi_{MESS,1} + 2 \cdot \pi \cdot (m - n)}{2 \cdot \pi \cdot 100 \; MHz} \qquad (5)$$

Die Ermittlung der Laufzeit r erfolgt nun nach Gleichung (5) unter Durchführung einer Fallunterscheidung: Für $\varphi_{MESS,1} < \varphi_{MESS,2}$ wird $m - n = 0$ gesetzt und für $\varphi_{MESS,1} > \varphi_{MESS,2}$ wird $m - n = 1$ gesetzt. Entsprechend ergibt sich

$$\tau = \frac{\varphi_{MESS,2} - \varphi_{MESS,1}}{2 \cdot \pi \cdot 100 \; MHz} \qquad für \; \varphi_{MESS,1} < \varphi_{MESS,2} \qquad (6)$$

bzw.

$$\tau = \frac{\varphi_{MESS,2} - \varphi_{MESS,1} + 2 \cdot \pi}{2 \cdot \pi \cdot 100 \; MHz} \qquad für \; \varphi_{MESS,1} > \varphi_{MESS,2} \; . \qquad (7)$$

Damit ist innerhalb des Eindeutigkeitsbereiches von 3 m eine eindeutige Zuordnung der gemessenen Phasen $\varphi_{MESS,1}$ und $\varphi_{MESS,2}$ zu der Laufzeit $\tau$ möglich.

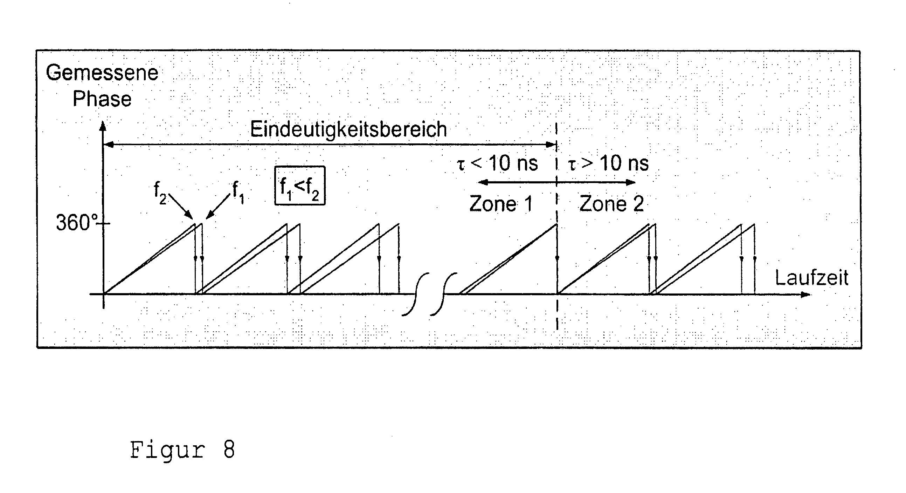

Die Figur 8 zeigt die jeweils für beide Signalfrequenzen gemessenen Phasen, aufgetragen über der Signallaufzeit. Ein bestimmtes Paar von gemessenen Phasen $\varphi_{MESS,1}$ und $\varphi_{MESS,2}$ lässt sich innerhalb des Eindeutigkeitsbereiches genau einer Laufzeit und damit genau einer Entfernung zum Messobjekt zuordnen.

Der oben gewählte Eindeutigkeitsbereich von 3 m ist beispielhaft zu sehen und ist durch den Frequenzabstand zweier Spektrallinien des Frequenzkammes bzw. durch dessen niedrigste Frequenz gegeben (im bisherigen Beispiel 100 MHz). Insbesondere ist noch zu ergänzen, dass die Richtigkeit der Laufzeitbestimmung aus der vieldeutigen Phase leicht verifizierbar ist:

Wie eingangs bereits gezeigt wurde, ist die Gesamtphase $\varphi = \omega \cdot \tau$, d. h., bei gegebener (konstanter) Laufzeit

$\tau$ ist $\varphi$ proportional zu $\omega$ und $\tau$ ist die Steigung dieses funktionalen Zusammenhanges. Als diskrete Gleichung kann damit G1. (1) in der Form

$$\tau \overset{!}{=} \frac{\varphi_1}{\omega_1} \overset{!}{=} \frac{\varphi_2}{\omega_2} \overset{!}{=} \frac{\varphi_2 - \varphi_1}{\omega_2 - \omega_1} \overset{!}{=} \cdots \qquad\qquad (8)$$

geschrieben werden. Damit ist die Richtigkeit der aus der vieldeutigen Messphase $\varphi_{Mess}$ bestimmten Gesamtphase $\varphi$ bei gegebener Frequenz f leicht nachzuweisen.

Durch Auswertung der Signalstärke des Messsignals kann zwischen unterschiedlichen Entfernungszonen unterschieden werden (Zone 1, Zone 2 usw. in Abb. 8). Über die Signalstärke kann damit eine Vorselektion der in den Gleichungen (2) und (3) eingeführten Ordnungszahlen m und n vorgenommen werden, so dass $\tau$ wieder aus Gleichung (5) bestimmbar wird. Die Richtigkeit der verwendeten m, n ist wieder über GI, (8) verifizierbar.

Der große Vorteil des oben beschriebenen Verfahrens ist, dass auf den 100 MHz Empfänger komplett verzichtet werden kann. Der Aufwand für die Empfängerelektronik reduziert sich dadurch beträchtlich.

**Patentansprüche**

1. Verfahren zum Messen des Abstandes eines Objekts, wobei bei dem Verfahren

- ein Sendesignal (S) auf das Objekt gelenkt wird und ein von dem Objekt reflektiertes Reflexionssignal (R) empfangen wird,
- die Phasendifferenz ($\varphi_{MESS,1}$) zwischen dem Sendesignal und dem Reflexionssignal für eine vorgegebene erste Spektrallinie des Sendesignals bestimmt wird,
- die Phasendifferenz ($\varphi_{MESS,2}$) zwischen dem Sendesignal und dem Reflexionssignal für eine zweite Spektrallinie des Sendesignals bestimmt wird und
- sowohl die Phasendifferenz ($\varphi_{MESS,1}$) zwischen dem Sendesignal und dem Reflexionssignal für die erste Spektrallinie als auch die Phasendifferenz ($\varphi_{MESS,2}$) zwischen dem Sendesignal und dem Reflexionssignal für die zweite Spektrallinie bei der Bestimmung des Abstands herangezogen wird, **dadurch gekennzeichnet, dass**
- als Sendesignal (S) eine eine vorgegebene Pulswiederholfrequenz (fw) aufweisende Pulsfolge erzeugt wird, so dass das Sendesignal im Frequenzbereich einen Frequenzkamm aufweist,
- das den Frequenzkamm aufweisende Sendesignal (S) auf das Objekt gelenkt wird,
- die Phasendifferenz ($\varphi_{MESS,1}$) zwischen dem Sendesignal und dem Reflexionssignal für eine vorgegebene erste Spektrallinie des Frequenzkamms bestimmt wird und
- die Phasendifferenz ($\varphi_{MESS,2}$) zwischen dem Sendesignal und dem Reflexionssignal für eine zweite Spektrallinie des Frequenzkamms bestimmt wird.

2. Verfahren nach Anspruch 1,
**dadurch gekennzeichnet, dass**

- geprüft wird, ob die Phasendifferenz ($\varphi_{MESS,1}$) für die erste Spektrallinie größer oder kleiner als die Phasendifferenz ($\varphi_{MESS,2}$) für die zweite Spektrallinie ist, und
- der Abstand in Abhängigkeit von dem Prüfergebnis bestimmt wird.

3. Verfahren nach einem der voranstehenden Ansprüche, **dadurch gekennzeichnet, dass** die zweite Spektrallinie eine höhere Frequenz als die erste Spektrallinie aufweist und ein Abstandswert A bestimmt wird gemäß

$$A = c * \frac{\varphi_{MESS,2} - \varphi_{MESS,1}}{2 \cdot \pi \cdot fw} \qquad \text{,} \quad \textit{falls gilt } \varphi_{MESS,1} < \varphi_{MESS,2}$$

und

$$A = c * \frac{\varphi_{MESS,1} - \varphi_{MESS,2} + 2 \cdot \pi}{2 \cdot \pi \cdot fw} \qquad \textit{falls gilt } \varphi_{MESS,1} > \varphi_{MESS,2}$$

wobei c die Ausbreitungsgeschwindigkeit des Sendesignals zu dem Objekt, $\varphi_{MESS,1}$ die Phasendifferenz zwischen Sendesignal und Reflexionssignal für die erste Spektrallinie, $\varphi_{MESS,2}$ die Phasendifferenz zwischen Sendesignal und Reflexionssignal für die zweite Spektrallinie und fw die Pulswiederholfrequenz bezeichnet.

4. Verfahren nach einem der voranstehenden Ansprüche, **dadurch gekennzeichnet, dass** als erste und zweite Spektrallinie zwei im Frequenzspektrum benachbarte Spektrallinien des Frequenzkammes ausgewertet werden.

5. Verfahren nach einem der voranstehenden Ansprüche, **dadurch gekennzeichnet, dass**

- die erste und die zweite Spektrallinie des Sendesignals und des Reflexionssignals jeweils auf dieselbe Zwischenfrequenz heruntergemischt werden und
- die Phasendifferenz ($\varphi_{MESS,1}$) zwischen dem Sendesignal und dem Reflexionssignal für die erste Spektrallinie und die Phasendifferenz ($\varphi_{MESS,2}$) zwischen dem Sendesignal und dem Reflexionssignal für die zweite Spektrallinie anhand der heruntergemischten Signale bestimmt werden.

6. Verfahren nach Anspruch 5,
**dadurch gekennzeichnet, dass**
zum Heruntermischen eine Oszillatorfrequenz verwendet wird, die im Frequenzband asymmetrisch zwischen zwei benachbarten Spektrallinien des Frequenzkammes liegt.

7. Verfahren nach einem der voranstehenden Ansprüche 5-6,
**dadurch gekennzeichnet, dass**
das Sendesignal und das Reflexionssignal für die erste und die zweite Spektrallinie jeweils auf eine Zwischenfrequenz zwischen 1 kHz und 20 MHz, vorzugsweise auf 10,7 MHz, heruntergemischt werden.

8. Anordnung zum Messen des Abstandes (A) eines Objekts mit

- einer Sendeeinrichtung zum Erzeugen eines Sendesignals (S), das im Frequenzbereich eine erste und eine zweite Spektrallinie aufweist,
- einer Empfangseinrichtung zum Empfangen eines von dem Objekt reflektierten Reflexionssignals (R) und
- einer Auswerteinrichtung, die sowohl die Phasendifferenz ($\varphi_{MESS,1}$) zwischen dem Sendesignal und dem Reflexionssignal für die erste Spektrallinie als auch die Phasendifferenz ($\varphi_{MESS,2}$) zwischen dem Sendesignal und dem Reflexionssignal für die zweite Spektrallinie bei der Bestimmung des Abstands heranzieht,
**dadurch gekennzeichnet, dass**
- die Sendeeinrichtung derart ausgestaltet ist, dass sie als Sendesignal (S) eine eine vorgegebene Pulswiederholfrequenz (fw) aufweisende Pulsfolge im Zeitbereich erzeugt, so dass das Sendesignal im Frequenzbereich einen Frequenzkamm aufweist, und
- die Auswerteinrichtung derart ausgestaltet ist, dass sie die Phasendifferenz ($\varphi_{MESS,1}$) zwischen dem Sendesignal und dem Reflexionssignal für eine vorgegebene erste Spektrallinie des Frequenzkamms bestimmt und die Phasendifferenz ($\varphi_{MESS,2}$) zwischen dem Sendesignal und dem Reflexionssignal für eine zweite Spektrallinie des Frequenzkamms bestimmt.

9. Anordnung nach Anspruch 8,
**dadurch gekennzeichnet, dass**
die Auswerteinrichtung die Phasendifferenz zwischen dem Sendesignal und dem Reflexionssignal für zwei unterschiedliche Spektrallinien des Frequenzkammes bestimmt und die beiden Phasendifferenzen zum Bestimmen des Abstands heranzieht.

10. Anordnung nach Anspruch 9,
**dadurch gekennzeichnet, dass**
die Auswerteinrichtung derart ausgestaltet ist, dass sie prüft, ob die Phasendifferenz ($\varphi_{MESS,1}$) für die erste Spektrallinie größer oder kleiner als die Phasendifferenz ($\varphi_{MESS,2}$) für die zweite Spektrallinie ist, und den Abstand in Abhängigkeit von dem Prüfergebnis bestimmt.

11. Anordnung nach einem der voranstehenden Ansprüche 9-10,
    **dadurch gekennzeichnet, dass**

    - die Anordnung zumindest einen umschaltbaren Oszillator sowie zumindest zwei mit dem Oszillator verbundene Mischer aufweist,
    - wobei die zwei Mischer wahlweise die erste oder die zweite Spektrallinie des Sendesignals und des Reflexionssignals auf dieselbe Zwischenfrequenz heruntermischen.

12. Anordnung nach Anspruch 11,
    **dadurch gekennzeichnet, dass**
    die Oszillatorfrequenz des Oszillators im Frequenzband asymmetrisch zwischen zwei benachbarten Spektrallinien des Frequenzkammes des Sende- oder Reflexionssignals liegt.


**Claims**

1. Method for measuring the distance of an object, in which in the course of the method

    - a transmitted signal (S) is directed onto the object and a reflected signal (R) reflected by the object is received,
    - the phase difference ($\varphi_{MESS,1}$) between the transmitted signal and the reflected signal is determined for a prescribed first spectral line of the transmitted signal,
    - the phase difference ($\varphi_{MESS,2}$) between the transmitted signal and the reflected signal is determined for a second spectral line of the transmitted signal, and both the phase difference ($\varphi_{MESS,1}$) between the transmitted signal and the reflected signal for the first spectral line, and the phase difference ($\varphi_{MESS,2}$) between the transmitted signal and the reflected signal for the second spectral line are used in determining the distance,
    **characterized in that**
    - as transmitted signal (S), a pulse train having a prescribed pulse repetition frequency (fw) is generated such that the transmitted signal has a frequency comb in the frequency domain,
    - the transmitted signal (S) having the frequency comb is directed onto the object,
    - the phase difference ($\varphi_{MESS,1}$) between the transmitted signal and the reflected signal is determined for a prescribed first spectral line of the frequency comb, and
    - the phase difference ($\varphi_{MESS,2}$) between the transmitted signal and the reflected signal is determined for a second spectral line of the frequency comb.

2. Method according to Claim 1,
   **characterized in that**

    - a test is made as to whether the phase difference ($\varphi_{MESS,1}$) for the first spectral line is greater or less than the phase difference ($\varphi_{MESS,2}$) for the second spectral line, and
    - the distance is determined as a function of the test result.

3. Method according to one of the preceding claims, **characterized in that**
   the second spectral line has a higher frequency than the first spectral line, and a distance value A is determined in accordance with

$$A = c * \frac{\varphi_{MESS,2} - \varphi_{MESS,1}}{2 \cdot \pi \cdot fw} \quad \text{if it holds that} \quad \varphi_{MESS,1} < \varphi_{MESS,2}$$

and

$$A = c * \frac{\varphi_{MESS,1} - \varphi_{MESS,2} + 2 \cdot \pi}{2 \cdot \pi \cdot fw} \quad \text{if it holds that} \quad \varphi_{MESS,1} > \varphi_{MESS,2}$$

c denoting the propagation rate of the transmitted signal to the object, $\varphi_{MESS,1}$ denoting the phase difference between transmitted signal and reflected signal for the first spectral line, $\varphi_{MESS,2}$ denoting the phase difference between transmitted signal and reflected signal for the second spectral line and fw denoting the pulse repetition frequency.

4. Method according to one of the preceding claims, **characterized in that** two spectral lines of the frequency comb that are adjacent in the frequency spectrum are evaluated as first and second spectral lines.

5. Method according to one of the preceding claims, **characterized in that**

 - the first and the second spectral lines of the transmitted signal and of the reflected signal are respectively downmixed to the same intermediate frequency, and
 - the phase difference ($\varphi_{MESS,1}$) between the transmitted signal and the reflected signal for the first spectral line, and the phase difference ($\varphi_{MESS,2}$) between the transmitted signal and the reflected signal for the second spectral line are determined with the aid of the downmixed signals.

6. Method according to Claim 5,
 **characterized in that**
 an oscillator frequency that lies in the frequency band asymmetrically between two adjacent spectral lines of the frequency comb is used for the downmixing.

7. Method according to one of the preceding Claims 5-6, **characterized in that**
 the transmitted signal and the reflected signal for the first and the second spectral lines are respectively downmixed to an intermediate frequency between 1 kHz and 20 MHz, preferably to 10.7 MHz.

8. Arrangement for measuring the distance (A) of an object, having

 - a transmitter for generating a transmitted signal (S) that has a first and a second spectral line in the frequency domain,
 - a receiver for receiving a reflected signal (R) reflected by the object, and
 - an evaluation device that uses both the phase difference ($\varphi_{MESS,1}$) between the transmitted signal and the reflected signal for the first spectral line, and the phase difference ($\varphi_{MESS,2}$) between the transmitted signal and the reflected signal for the second spectral line in determining the distance, **characterized in that**
 - the transmitter is configured in such a way that as transmitted signal (S), it generates in the time domain a pulse sequence having a prescribed pulse repetition frequency (fw) so that the transmitted signal has a frequency comb in the frequency domain, and
 - the evaluation device is configured in such a way that it determines the phase difference ($\varphi_{MESS,1}$) between the transmitted signal and the reflected signal for a prescribed first spectral line of the frequency comb, and determines the phase difference ($\varphi_{MESS,2}$) between the transmitted signal and the reflected signal for a second spectral line of the frequency comb.

9. Arrangement according to Claim 8,
 **characterized in that**
 the evaluation device determines the phase difference between the transmitted signal and the reflected signal for two different spectral lines of the frequency comb, and uses the two phase differences in order to determine the distance.

10. Arrangement according to Claim 9,
 **characterized in that**
 the evaluation device is configured in such a way that it tests whether the phase difference ($\varphi_{MESS,1}$) for the first spectral line is greater or less than the phase difference ($\varphi_{MESS,2}$) for the second spectral line, and determines the distance as a function of the test result.

11. Arrangement according to one of the preceding Claims 9-10,
 **characterized in that**

 - the arrangement has at least one switchable oscillator and at least two mixers connected to the oscillator,
 - the two mixers optionally downmixing the first or the second spectral line of the transmitted signal and of the reflected signal to the same intermediate frequency.

**12.** Arrangement according to Claim 11,
**characterized in that**
the oscillator frequency of the oscillator lies in the frequency band asymmetrically between two adjacent spectral lines of the frequency comb of the transmitted or reflected signal.

**Revendications**

**1.** Procédé pour mesurer la distance d'un objet, lors du procédé,

- un signal d'émission (S) étant dirigé vers l'objet et un signal de réflexion (R) réfléchi par l'objet étant réceptionné,
- la différence de phases ($\varphi_{MESS,1}$) entre le signal d'émission et le signal de réflexion étant déterminée pour une première ligne spectrale prescrite du signal d'émission,
- la différence de phases ($\varphi_{MESS,2}$) entre le signal d'émission et le signal de réflexion étant déterminée pour une deuxième ligne spectrale du signal d'émission, et
- la différence de phases ($\varphi_{MESS,1}$) entre le signal d'émission et le signal de réflexion pour la première ligne spectrale tout comme également la différence de phases ($\varphi_{MESS,2}$) entre le signal d'émission et le signal de réflexion pour la deuxième ligne spectrale étant prises en compte lors de la détermination de la distance,
**caractérisé en ce que**
- en guise de signal d'émission (S), on génère un train d'impulsions présentant une fréquence de répétition d'impulsions (fw) prescrite, de sorte que le signal d'émission présente, dans la plage de fréquences, un peigne de fréquences,
- le signal d'émission (S) présentant le peigne de fréquences est dirigé vers l'objet,
- la différence de phases ($\varphi_{MESS,1}$) entre le signal d'émission et le signal de réflexion est déterminée pour une première ligne spectrale prescrite du peigne de fréquences,
et
- la différence de phases ($\varphi_{MESS,2}$) entre le signal d'émission et le signal de réflexion est déterminée pour une deuxième ligne spectrale du peigne de fréquences.

**2.** Procédé selon la revendication 1, **caractérisé en ce que**

- l'on vérifie si la différence de phases ($\varphi_{MESS,1}$) pour la première ligne spectrale est supérieure ou inférieure à la différence de phases ($\varphi_{MESS,2}$) pour la deuxième ligne spectrale, et
- la distance est déterminée en fonction du résultat de la vérification.

**3.** Procédé selon l'une des revendications précédentes, **caractérisé en ce que**
la deuxième ligne spectrale présente une fréquence plus élevée que la première ligne spectrale, et l'on détermine une valeur de distance A conformément à

$$A = c * \frac{\varphi_{MESS,2} - \varphi_{MESS,1}}{2 \cdot \pi \cdot fw}$$

lorsque $\varphi_{MESS,1} < \varphi_{MESS,2}$ et

$$A = c * \frac{\varphi_{MESS,1} - \varphi_{MESS,2} + 2 \cdot \pi}{2 \cdot \pi \cdot fw}$$

lorsque $\varphi_{MESS,1} > \varphi_{MESS,2}$,
c étant la vitesse de propagation du signal d'émission vers l'objet, $\varphi_{MESS,1}$ la différence de phases entre le signal d'émission et le signal de réflexion pour la première ligne spectrale, $\varphi_{MESS,2}$ la différence de phases entre le signal d'émission et le signal de réflexion pour la deuxième ligne spectrale et fw la fréquence de répétition d'impulsions.

**4.** Procédé selon l'une des revendications précédentes, **caractérisé en ce que,**
en guise de première et deuxième lignes spectrales, on évalue deux lignes spectrales voisines dans le spectre de fréquences du peigne de fréquences.

5. Procédé selon l'une des revendications précédentes, **caractérisé en ce que**

- les première et deuxième lignes spectrales du signal d'émission et du signal de réflexion sont respectivement mixées à la baisse à la même fréquence intermédiaire et
- la différence de phases ($\varphi_{MESS,1}$) entre le signal d'émission et le signal de réflexion pour la première ligne spectrale et la différence de phases ($\varphi_{MESS,2}$) entre le signal d'émission et le signal de réflexion pour la deuxième ligne spectrale sont déterminées à l'aide des signaux mixés à la baisse.

6. Procédé selon la revendication 5, **caractérisé en ce que**,
pour le mixage à la baisse, on utilise une fréquence d'oscillateur qui se situe de manière asymétrique dans la bande de fréquence entre deux lignes spectrales voisines du peigne de fréquences.

7. Procédé selon l'une des revendications 5-6 précédentes, **caractérisé en ce que**
le signal d'émission et le signal de réflexion pour les première et deuxième lignes spectrales sont respectivement mixés à la baisse à une fréquence intermédiaire entre 1 kHz et 20 MHz, de préférence à 10,7 MHz.

8. Agencement pour mesurer la distance (A) d'un objet avec

- un dispositif d'émission pour la génération d'un signal d'émission (S), lequel présente une première et une deuxième ligne spectrale dans la plage de fréquences,
- un dispositif de réception pour la réception d'un signal de réflexion (R) réfléchi par l'objet et
- un dispositif d'évaluation, lequel prend en compte la différence de phases ($\varphi_{MESS,1}$) entre le signal d'émission et le signal de réflexion pour la première ligne spectrale tout comme également la différence de phases ($\varphi_{MESS,2}$) entre le signal d'émission et le signal de réflexion pour la deuxième ligne spectrale lors de la détermination de la distance,
**caractérisé en ce que**
- le dispositif d'émission est conçu de manière à générer, en guise de signal d'émission (S), un train d'impulsions présentant une fréquence de répétition d'impulsions (fw) prescrite dans la plage temporelle, de sorte que le signal d'émission présente, dans la plage de fréquences, un peigne de fréquences, et
- le dispositif d'évaluation est conçu de manière à ce qu'il détermine la différence de phases ($\varphi_{MESS,1}$) entre le signal d'émission et le signal de réflexion pour une première ligne spectrale prescrite du peigne de fréquences, et à ce qu'il détermine la différence de phases ($\varphi_{MESS,2}$) entre le signal d'émission et le signal de réflexion pour une deuxième ligne spectrale du peigne de fréquences.

9. Agencement selon la revendication 8, **caractérisé en ce que**
le dispositif d'évaluation détermine la différence de phases entre le signal d'émission et le signal de réflexion pour deux lignes spectrales différentes du peigne de fréquences, et prend en compte les deux différences de phases pour la détermination de la distance.

10. Agencement selon la revendication 9, **caractérisé en ce que**
le dispositif d'évaluation est conçu de manière à ce qu'il vérifie si la différence de phases ($\varphi_{MESS,1}$) pour la première ligne spectrale est supérieure ou inférieure à la différence de phases ($\varphi_{MESS,2}$) pour la deuxième ligne spectrale, et à ce qu'il détermine la distance en fonction du résultat de la vérification.

11. Agencement selon l'une des revendications 9-10 précédentes, **caractérisé en ce que**

- l'agencement présente au moins un oscillateur commutable ainsi qu'au moins deux mélangeurs en liaison avec l'oscillateur,
- les deux mélangeurs mixant à la baisse à la même fréquence intermédiaire, au choix, la première ou la deuxième ligne spectrale du signal d'émission et du signal de réflexion.

12. Agencement selon la revendication 11, **caractérisé en ce que**
la fréquence d'oscillateur de l'oscillateur se situe dans la bande de fréquence, de manière asymétrique, entre deux lignes spectrales voisines du peigne de fréquences du signal d'émission ou de réflexion.

Figur 1

EP 2 406 659 B1

Figur 2

Figur 3

EP 2 406 659 B1

EP 2 406 659 B1

Figur 4

Figur 5

EP 2 406 659 B1

Figur 6

EP 2 406 659 B1

Figur 7

Figur 8

EP 2 406 659 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4537502 A
- US 5742379 A
- GB 2336493 A